# EUROPÄISCHE PATENTSCHRIFT

(11) **EP 1 979 634 B1**
(45) Veröffentlichungstag und Bekanntmachung des Hinweises auf die Patenterteilung: **05.08.2009**
(21) Anmeldenummer: 07702919.7
(22) Anmeldetag: 20.01.2007
(51) Int. Cl.: F16B 41/00

(54) **MONTAGEEINHEIT FÜR DIE BEFESTIGUNGSÖSE EINES GURTSCHLOSSES**
MOUNTING UNIT FOR THE FASTENING EYELET OF A BELT BUCKLE
UNITÉ DE MONTAGE DESTINÉE À UN ANNEAU DE FIXATION D'UNE BOUCLE DE CEINTURE

(30) Priorität: 02.02.2006 DE 102006004678
(43) Veröffentlichungstag der Anmeldung: 15.10.2008
(73) Patentinhaber: Kamax-Werke Rudolf Kellermann GmbH & Co. KG, 37520 Osterode am Harz (DE); A. RAYMOND ET CIE, 38000 Grenoble (FR)
(72) Erfinder: CHRETIEN, Sylvain, 91781 Wissous (FR); MOHR, Andreas, 35387 Amöneburg-Mardorf (DE); LUTZ, Karl-Eduard, 36325 Feldatal (DE); GOMBERT, Stéphane, F-38640 Claix (FR); CIRASARO, Nicolas, F-38500 La Buisse (FR)
(74) Vertreter: Rehberg, Bernhard Frank
(86) Internationale Anmeldenummer: PCT/EP2007/000491
(87) Internationale Veröffentlichungsnummer: WO 2007/087991

(56) Entgegenhaltungen:
- WO-A-00/36307
- DE-A1- 10 055 405
- US-A- 3 156 281

## Beschreibung

### TECHNISCHES GEBIET DER ERFINDUNG

Die Erfindung betrifft eine Montageeinheit für die drehbare und unverlierbare Befestigung einer Schraube an einem Montageteil sowie eine Montagegruppe für die Verschraubung eines Montageteils mit einem Bauteil.

Bei dem Montageteil kann es sich um ein beliebiges Teil handeln, das im fest mit dem Bauteil verschraubten Zustand relativ zu diesem drehbar bzw. schwenkbar ist. Insbesondere handelt es sich bei dem Montageteil um die Befestigungsöse eines Gurtschlosses eines Pkw, Lkw oder anderen Nutzfahrzeugs.

### STAND DER TECHNIK

Aus **Nutzfahrzeugen der DaimlerChrysler AG** ist eine Montageeinheit für die drehbare und unverlierbare Befestigung der Befestigungsöse eines Gurtschlosses (Montageteil) an einem Teil des Innenraums (Bauteil) des Nutzfahrzeugs bekannt. Die Montageeinheit weist eine Schraube mit einem Kopf, einem Schaftabschnitt und einem Gewindeabschnitt mit einem Gewinde auf. Der Schaftabschnitt ist in einem Bereich zwischen dem Kopf und dem Gewindeabschnitt angeordnet. Weiterhin weist die Montageeinheit eine Unterlegscheibe und zwei Montagescheiben auf. Notwendiger Teil der Montageeinheit ist weiterhin das Montageteil, ohne welches keine Montageeinheit, sondern lediglich insgesamt fünf separate Elemente vorliegen. Zur Montage der Montageeinheit wird zunächst die Unterlegscheibe auf den Schaftabschnitt der Schraube aufgeschoben. Die Unterlegscheibe weist eine Bohrung auf, deren Innendurchmesser größer als der Außendurchmesser des Schaftabschnitts und kleiner als der des Kopfs der Schraube ist, so dass die Unterlegscheibe an der Kopfauflage des Kopfs zum Anliegen kommt. Anschließend wird das Montageteil mit seiner Bohrung über die Schraube geführt, bis das Montageteil an der Unterlegscheibe zum Anliegen kommt. Der Innendurchmesser der Bohrung des Montageteils ist also ebenfalls größer als der Außendurchmesser des Schaftabschnitts der Schraube. Danach wird die erste Montagescheibe über die Schraube geschoben. Die erste Montagescheibe besitzt eine gestufte Ausbildung derart, dass sie einen ersten Abschnitt aufweist, dessen Außendurchmesser etwas kleiner als der Innendurchmesser der Bohrung des Montageteils ist, der dann in die Bohrung des Montageteils eingeschoben wird. Der zweite Abschnitt weist einen größeren Außendurchmesser auf und liegt somit an der äußeren Oberfläche des Montageteils an. Für die unverlierbare Verbindung der Montageeinheit sorgt schließlich die zweite Montagescheibe. Die zweite Montagescheibe weist an ihrem inneren Umfang radiale Schlitze auf, zwischen denen somit Lappen geformt sind. Bei der Montage der zweiten Montagescheibe greifen diese Lappen in die Gewindegänge des Gewindes ein, und die zweite Montagescheibe wird derart auf das Gewinde der Schraube aufgeschraubt oder bei entsprechend elastischer Ausführung über das Gewinde gepresst oder geschoben, bis sie die erste Montagescheibe kontaktiert und somit das Montageteil zwischen der ersten Montagescheibe und der Unterlegscheibe einklemmt. Durch entsprechende Werkstoffwahl ist sichergestellt, dass das notwendige Radialspiel zwischen Montageteil und Montagescheibe nicht zu Klappergeräuschen führt. Diese bekannte Montageeinheit ist vergleichsweise kompliziert aufgebaut und erfordert neben der Schraube und dem Montageteil drei weitere separate Teile. Eine unverlierbare Montageeinheit wird erst nach der Montage des Montageteils erreicht.

Weiterhin ist es im **Stand der Technik im Automobilbereich** bekannt, die Befestigungsöse eines Gurtschlosses (Montageteil) eines Pkw oder eines Lkw drehbar an einem Teil des Innenraums (Bauteil) des Pkw bzw. Lkw zu befestigen. Hierfür wird keine Montageeinheit verwendet. Das Montageteil wird mittels einer Schraube und einer separaten, federnd ausgebildeten Wellenscheibe mit dem Bauteil verschraubt. Die Schraube weist einen Kopf, einen Schaftabschnitt und einen Gewindeabschnitt mit einem Gewinde auf, wobei der Schaftabschnitt in einem Bereich zwischen dem Kopf und dem Gewindeabschnitt angeordnet ist. Die Wellenscheibe weist eine Bohrung mit einem Innendurchmesser auf, der größer als der Außendurchmesser des Schaftabschnitts ist. Zunächst wird also die Wellenscheibe über die Schraube geschoben, bis sie in etwa am Kopf der Schraube zur Anlage kommt. Die Wellenscheibe ist dabei jedoch in keiner Weise fest mit der Schraube verbunden. Daraufhin wird die Befestigungsöse des Gurtschlosses ebenfalls über die Schraube geschoben. In dieser losen Position der drei Teile wird die Schraube in eine Bohrung des Bauteils eingeschraubt, bis die den Schaftabschnitt in Richtung auf den Gewindeabschnitt begrenzende Schulter der Schraube fest am Bauteil anliegt. Die Wellenscheibe liegt dabei mit ihrer einen Seite an dem Bauteil und mit ihrer anderen Seite an der Befestigungsöse an, so dass die Befestigungsöse eingespannt wird. Die Befestigungsöse ist also zwischen der Wellenscheibe und dem Kopf der Schraube drehbar und in Richtung der Schraubenachse unverschieblich festgesetzt. Die Federkraft der Wellenscheibe dient dazu, Klappergeräusche aufgrund des axialen Spiels der Befestigungsöse zu vermeiden.

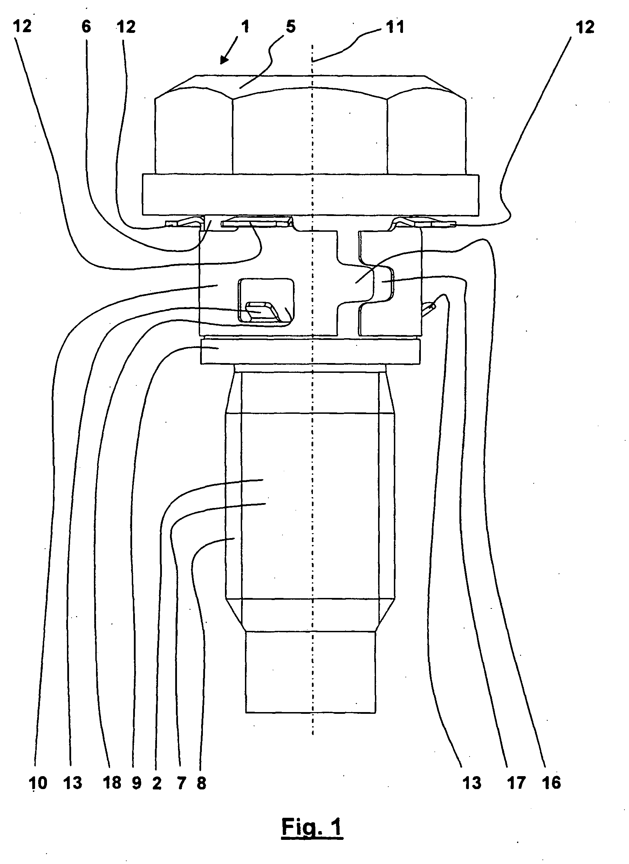

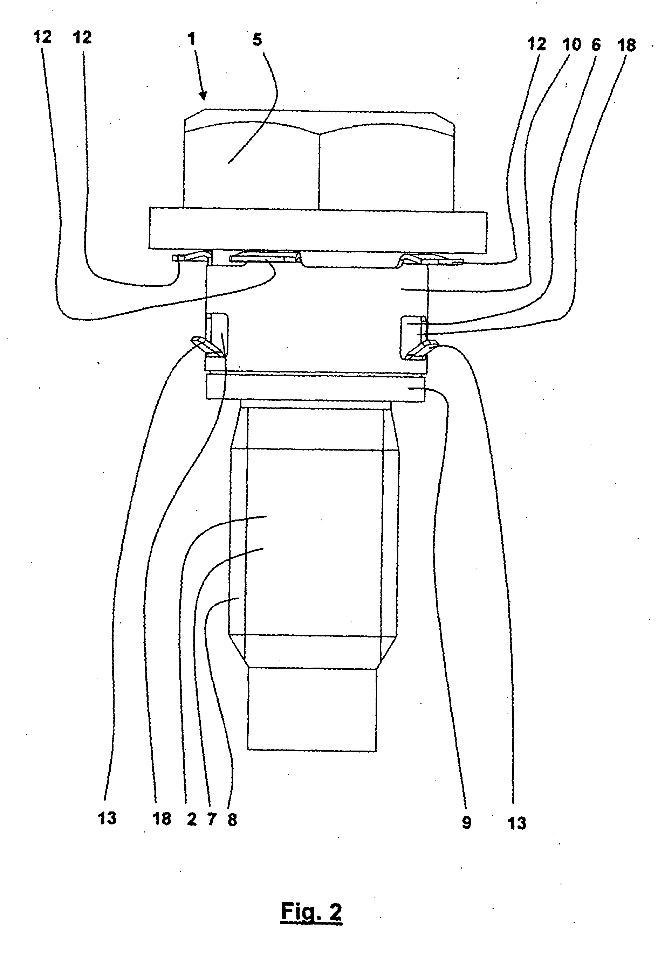

Aus der unter dem Aktenzeichen DE 100 55 405 A1 veröffentlichten deutschen Patentanmeldung ist eine Montageeinheit für die drehbare und unverlierbare Befestigung einer Schraube an einem Montageteil bekannt. Die Montageeinheit weist eine Schraube mit einem Kopf, einem Schaftabschnitt und einem Gewindeabschnitt mit einem Gewinde auf, wobei der Schaftabschnitt in einem Bereich zwischen dem Kopf und dem Gewindeabschnitt angeordnet ist. Die Montageeinheit weist weiterhin einen Montagering auf. Der Montagering besteht aus Kunststoff und ist elastisch ausgebildet. Weiterhin sind ein Montageteil mit einer Bohrung sowie ein Bauteil mit einer dem Gewinde der Schraube zugeordneten Bohrung mit einem Innengewinde vorgesehen. Aufgrund des unrunden Querschnitts der Bohrung des Montageteils ist der Montagering nicht drehbar in dem Montageteil angeordnet. Über einen Kragen und eine Spreizrippe ist der Montagering weiterhin in Richtung der Schraubenachse relativ zu dem Montageteil unverschieblich angeordnet. Der Montagering weist einen inneren Durchmesser auf, der kleiner als der Außendurchmesser des Gewindes des Gewindeabschnitts der Schraube ist. In der nicht vollständig in das Bauteil eingeschraubten Stellung der Montageeinheit (Fig. 1) ist der Montagering im Bereich des Gewindeabschnitts der Schraube angeordnet. Aufgrund der gegenseitigen Dimensionierung des Innendurchmessers des Montagerings und des Außendurchmessers bzw. des Kerndurchmessers des Gewindes des Gewindeabschnitts der Schraube kann der Montagering mittels einer elastischen oder auch einer elastisch-plastischen Verformung relativ zu der Schraube bewegt bzw. die Schraube in den Montagering eingeschraubt oder eingedrückt werden. Erst nach Abschluss der Montage des Montageteils an dem Bauteil - d. h. wenn die Schraube vollständig in das Bauteil eingeschraubt wurde (Fig. 2) - ist der Montagering im Bereich des Schaftabschnitts der Schraube angeordnet. In dieser Stellung hat der Montagering seine Funktion bereits erfüllt und ist in diesem Sinne überflüssig. Er ist weder drehbar noch verschieblich relativ zu dem Montageteil. Der Montagering erfüllt somit seine eigentliche Funktion in Verbindung mit dem Gewindeabschnitt der Schraube (Fig. 1). Mit der Befestigung eines Montageteils an einem Bauteil derart, dass das Montageteil in dem mit dem Bauteil verschraubten Zustand relativ zu diesem drehbar ist, beschäftigt sich dieses Dokument des Stands der Technik überhaupt nicht.

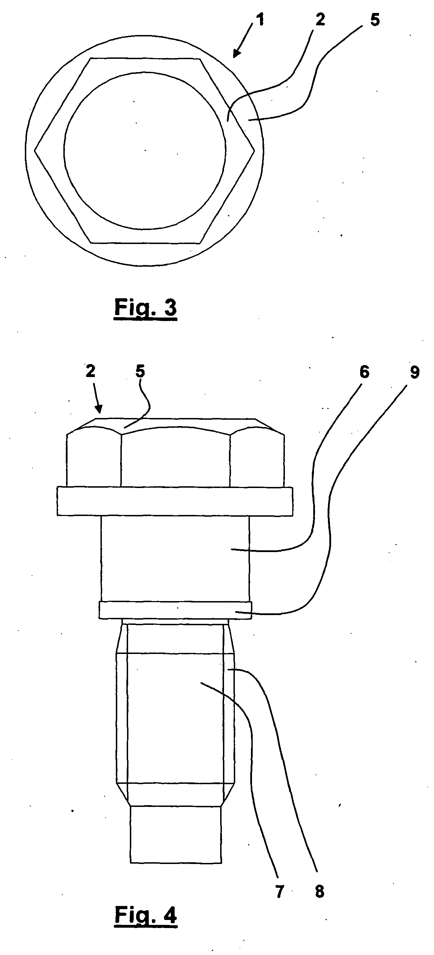

Eine weitere Montageeinheit für die drehbare und unverlierbare Befestigung einer Schraube an einem Montageteil ist aus dem unter dem Aktenzeichen US 3,156,281 veröffentlichten US-Patent bekannt. Die Montageeinheit weist eine Schraube mit einem Kopf, einem Schaftabschnitt und einem Gewindeabschnitt mit einem Gewinde auf. Der Schaftabschnitt ist in einem Bereich zwischen dem Kopf und dem Gewindeabschnitt angeordnet. Weiterhin weist die Montageeinheit einen Montagering auf. Der Montagering ist insbesondere aus elastischem Federstahl ausgebildet. In der nicht mit dem Montageteil verbundenen Stellung der Montageeinheit (Fig. 3) ist der Montagering frei verschieblich und drehbar im Bereich des Schafts der Schraube angeordnet. Die Kombination aus Schraube und Montagering wird dann in das Montageteil von oben eingeführt (Fig. 4). Der Montagering weist an seinem äußeren Umfang hervorstehende elastische Elemente auf, die zu einem gewissen Grad eine Befestigung des Montagerings in der Öffnung des Montageteils sicherstellen. Die Schraube hingegen ist relativ zu dem Montagering frei drehbar und kann um den Abstand zwischen Schraubenkopf und dem kopfseitigen Ende des Gewindeabschnitts relativ zu dem Montageteil und zu dem Montagering frei verschoben werden. Mit der Befestigung eines Montageteils an einem Bauteil derart, dass das Montageteil in dem mit dem Bauteil verschraubten Zustand relativ zu diesem drehbar ist, beschäftigt sich dieses Dokument des Stands der Technik überhaupt nicht.

### AUFGABE DER ERFINDUNG

Der vorliegenden Erfindung liegt die Aufgabe zugrunde, eine Montageeinheit für die drehbare und unverlierbare Befestigung einer Schraube an einem Montageteil sowie eine Montagegruppe bereitzustellen, mit denen eine feste Verbindung des Montageteils an einem Bauteil realisiert werden kann, wobei das Montageteil in der montierten Stellung relativ zu der Schraube und somit dem Bauteil drehbar ist.

### LÖSUNG

Die Aufgabe der Erfindung wird erfindungsgemäß mit den Merkmalen der unabhängigen Patentansprüche 1 bzw. 11 gelöst.

### BESCHREIBUNG DER ERFINDUNG

Die Erfindung betrifft eine Montageeinheit für die drehbare und unverlierbare Befestigung einer Schraube an einem Montageteil. Die Montageeinheit weist eine Schraube und einen Montagering auf. Die Schraube besitzt einen Kopf, einen Schaftabschnitt und einen Gewindeabschnitt mit einem Gewinde, wobei der Schaftabschnitt in einem Bereich zwischen dem Kopf und dem Gewindeabschnitt angeordnet ist. Der Montagering ist in Richtung der Schraubenachse unverschieblich auf dem Schaftabschnitt angeordnet. Der Montagering weist mindestens ein Halteelement auf, das derart ausgebildet und angeordnet ist, dass ein Montageteil über das Halteelement hinweg schiebbar und so durch das Halteelement befestigbar ist, dass die Schraube relativ zu dem Montageteil drehbar und in Richtung der Schraubenachse unverschieblich angeordnet ist.

Die Erfindung betrifft weiterhin eine Montagegruppe für die Verschraubung eines Montageteils mit einem Bauteil. Die Montagegruppe weist ein Montageteil, eine Schraube und einen Montagering auf. Die Schraube besitzt einen Kopf, einen Schaftabschnitt und einen Gewindeabschnitt mit einem Gewinde, wobei der Schaftabschnitt in einem Bereich zwischen dem Kopf und dem Gewindeabschnitt angeordnet ist und sich die Schraube durch die Bohrung des Montageteils erstreckt. Der Montagering ist in Richtung der Schraubenachse unverschieblich auf dem Schaftabschnitt angeordnet, wobei der Montagering mindestens ein Halteelement aufweist, das derart ausgebildet und angeordnet ist, dass das Montageteil so durch das Halteelement gehalten ist, dass die Schraube relativ zu dem Montageteil drehbar und in Richtung der Schraubenachse unverschieblich angeordnet ist.

Die neue Montageeinheit weist also mindestens zwei Bestandteile - nämlich eine Schraube und einen Montagering - auf, die unverlierbar miteinander verbunden sind. Vorzugsweise weist sie keine weiteren Bestandteile auf. Die Schraube und der Montagering bilden also bereits eine gemeinsame Montageeinheit, die ohne die Gefahr des Verlierens eines der Bestandteile transportier- und handhabbar ist. Diese Montageeinheit wiederum wird früher oder später mit einem Montageteil in Verbindung gebracht, wobei in dieser montierten Stellung die dann drei Komponenten Schraube, Montagering und Montageteil ebenfalls unverlierbar miteinander verbunden sind und eine Montagegruppe bilden. Das Montageteil ist dabei im Wesentlichen unverschieblich zu der Schraube bzw. dem Montagering angeordnet. Es existiert also keine oder zumindest keine wesentliche translatorische Relativbewegung zwischen dem Montageteil und der Montageeinheit. Unter einer unverschieblichen Anordnung der Schraube relativ zu dem Montageteil ist eine im Wesentlichen unverschiebliche Anordnung zu verstehen. Eine geringfügige Verschieblichkeit im Sinne eines gewissen Spiels ist darin eingeschlossen.

Dem hingegen ist die Anordnung so gewählt, dass eine rotatorische Relativbewegung zwischen der Montageeinheit und dem Montageteil möglich ist. Für die Realisierung der rotatorischen Relativbewegung zwischen der Montageeinheit und dem Montageteil gibt es verschiedene Möglichkeiten. So kann bereits der Montagering relativ zu der Schraube drehbar auf dieser angeordnet sein. In diesem Fall kann dann das Montageteil entweder ebenfalls drehbar oder auch fest - d. h. nicht drehbar - auf dem Montagering sitzen. Wenn der Montagering nicht drehbar auf der Schraube angeordnet ist, wird die dann erforderliche rotatorische Relativbewegung zwischen der Montageeinheit und dem Montageteil dadurch sichergestellt, dass das Montageteil relativ zu dem Montagering drehbar ist.

In dieser Weise erhält man eine Kombination von Montageeinheit und Montageteil (Montagegruppe), die über das Außengewinde des Gewindeabschnitts der Schraube der Montageeinheit in eine mit einem korrespondierenden Innengewinde versehene Bohrung eines Bauteils eingeschraubt werden kann. Auch nach Herstellung dieser festen Verbindung ist das Montageteil weiterhin relativ zu der Montageeinheit und somit zu dem Bauteil drehbar. Eine derart feste, aber drehbare bzw. schwenkbare Verbindung bietet sich besonders für die Befestigung der Befestigungsöse eines Gurtschlosses eines Pkw, Lkw oder anderen Fahrzeugs an. Für die Bedienbarkeit eines Gurtsystems ist es bekanntlich erforderlich, die Befestigungsöse, an der das eigentliche Gurtschloss über einen festen Gurtabschnitt angelenkt ist, fest im Innenraumbereich des Fahrzeugs zu montieren, um die gewünschte Rückhaltefunktion des Gurtsystems zu gewährleisten. Hierfür ist es erforderlich, dass die Befestigungsöse und somit das Gurtschloss des Fahrzeugs drehbar bzw. schwenkbar mit dem Innenraum des Fahrzeugs verbunden ist. Die neue Montageeinheit und die neue Montagegruppe gewährleisten diese Art der Verbindung nun erstmalig im Sinne einer vormontierbaren, unverlierbaren Einheit unter Abkehr von den im Stand der Technik bekannten separaten Elementen.

Das mindestens eine Halteelement kann elastisch nachgiebig und derart aus dem Montagering hervorstehend ausgebildet sein, dass das Montageteil unter elastischer Verformung des Halteelements über dieses hinweg schiebbar und nach elastischer Rückfederung des Halteelements durch das Halteelement befestigbar ist. In anderen Worten ist das Halteelement also als Schnappelement ausgebildet, welches im Sinne einer Schnappverbindung an dem Montageteil angreift und dieses auf dem Montagering fixiert. Das Montageteil wird also mit seiner Bohrung über das Halteelement hinweg geschoben, wobei das Halteelement in Richtung auf die Längsmittelachse der Montageeinheit elastisch verformt bzw. angedrückt wird. Nach dem vollständigen Überschieben des Montageteils über das Halteelement bzw. das vollständige Einführen der Montageeinheit in die Bohrung des Montageteils kommt das Halteelement derart von der inneren Oberfläche der Bohrung des Montageteils frei, dass es elastisch in seine Ausgangsposition zurückfedern kann. Das Halteelement kontaktiert dabei nun die äußere Oberfläche des Montageteils und greift somit quasi in eine Hinterschneidung der Bohrung des Montageteils ein. In dieser Position verhindert das Halteelement wirksam eine entgegengesetzte translatorische Relativbewegung zwischen der Montageeinheit und dem Montageteil. Für eine Demontage muss das Halteelement bewusst wiederum in Richtung auf die Längsmittelachse der Schraube so weit angedrückt werden, bis das freie Ende des Halteelements wiederum in die Bohrung des Montageteils eingreift. Eine ungewollte Demontage wird somit wirksam verhindert.

Vorzugsweise ist nicht nur ein solches Halteelement, sondern eine Mehrzahl von Halteelementen vorgesehen. Diese sind insbesondere um den Umfang des Montagerings gleichmäßig verteilt angeordnet. Hierdurch wird eine sichere und gleichmäßige Befestigung des Montageteils an der Montageeinheit gewährleistet. Vorzugsweise stehen die Halteelemente in einem Winkel von zwischen etwa 5° und 45°, insbesondere zwischen etwa 25° und 30°, von der Oberfläche des Montagerings ab.

Der Montagering kann mindestens ein Anpresselement aufweisen, wobei das mindestens eine Halteelement im Bereich des dem Gewindeabschnitt zugewandten axialen Endes des Montagerings und das mindestens eine Anpresselement im Bereich des dem Kopf zugewandten axialen Endes des Montagerings derart angeordnet ist, dass das Montageteil ohne axiales Spiel zwischen dem mindestens einen Anpresselement und dem mindestens einen Halteelement befestigbar ist. Das mindestens eine Anpresselement stellt also eine spielfreie und somit klapperfreie Befestigung der Montageeinheit in der Bohrung des Montageteils bereit. Hierfür ist das Anpresselement vorzugsweise elastisch nachgiebig und zum Aufbringen einer Federkraft auf das Montageteil ausgebildet, so dass das Montageteil in montiertem Zustand an das Halteelement angepresst wird. Das Montageteil ist somit zwischen seinen beiden äußeren Oberflächen spiel- und klapperfrei zwischen dem Anpresselement und dem Halteelement eingespannt.

Vorzugsweise ist nicht nur ein solches Anpresselement, sondern eine Mehrzahl von Anpresselementen vorgesehen. Diese sind insbesondere um den Umfang des Montagerings gleichmäßig verteilt angeordnet.

Der Montagering kann als in Umfangsrichtung nicht geschlossener Ring, insbesondere aus Federstahl, ausgebildet sein. Ein derartiger nicht geschlossener nachgiebiger Ring kann in einfacher Weise und gut automatisierbar auf die Schraube aufgeschoben werden. Zur axialen Befestigung des Montagerings auf der Schraube gibt es verschiedene Möglichkeiten. Eine erste Möglichkeit ist es, dass die Schraube eine Schulter aufweist, die in Richtung der Schraubenachse zum Gewindeabschnitt hin an den Schaftabschnitt anschließt und einen größeren Außendurchmesser als der Schaftabschnitt aufweist. Nach einer elastischen Aufweitung des Montagerings greift dieser dann also hinter die Schulter, welche eine translatorische Rückbewegung des Montagerings verhindert. Alternativ oder zusätzlich kann die Schraube eine Nut aufweisen, die im Bereich des Schaftabschnitts vorgesehen ist, wobei der Montagering mindestens ein korrespondierendes Fixierelement aufweist, das in die Nut eingreift. Die Nut kann sich dabei ringförmig geschlossen um den äußeren Umfang der Schraube erstrecken oder auch eine Mehrzahl von getrennten Abschnitten aufweisen. Bei der ersten Variante ist eine relative Drehung des Montagerings zu der Schraube ohne weiteres möglich, während die zweite Variante eine derartige Drehung zumindest erschwert.

Vorzugsweise besitzt der Schaftabschnitt einen größeren Außendurchmesser als der Gewindeabschnitt. Somit kann der Montagering problemlos über den Gewindeabschnitt der Schraube in Richtung auf den Kopf der Schraube geschoben werden, ohne dass die Handhabung erschwert oder eine Beschädigung des Gewindes des Gewindeabschnitts zu befürchten ist. Es wäre aber ebenfalls denkbar, dass der Schaftabschnitt einen kleineren Außendurchmesser als der Gewindeabschnitt aufweist, wobei in diesem Fall zur Gewährleistung der Montierbarkeit des Montageteils an der Montageeinheit der Montagering eine größere Dicke aufweisen muss, damit die Bohrung des Montageteils einerseits über das Gewinde geschoben und andererseits sicher auf dem Außendurchmesser des Montagerings montiert werden kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Seitenansicht einer ersten beispielhaften Ausführungsform der neuen Montageeinheit.
- **Fig. 2**: zeigt eine zweite Seitenansicht der ersten beispielhaften Ausführungsform der neuen Montageeinheit.
- **Fig.3**: zeigt eine Draufsicht der ersten beispielhaften Ausführungsform der neuen Montageeinheit.
- **Fig. 4**: zeigt eine Seitenansicht der Schraube der ersten beispielhaften Ausführungsform der neuen Montageeinheit.
- **Fig. 5**: zeigt eine Draufsicht des Montagerings der ersten beispielhaften Ausführungs- form der neuen Montageeinheit.
- **Fig. 6**: zeigt eine perspektivische Ansicht des Montagerings der ersten beispielhaften Ausführungsform der neuen Montageeinheit.
- **Fig.7**: zeigt eine erste Seitenansicht des Montagerings der ersten beispielhaften Ausführungsform der neuen Montageeinheit.
- **Fig.8**: zeigt eine zweite Seitenansicht des Montagerings der ersten beispielhaften Ausführungsform der neuen Montageeinheit.
- **Fig. 9**: zeigt eine teilweise geschnittene Ansicht der in einem Montageteil montierten ersten beispielhaften Ausführungsform der neuen Montageeinheit.
- **Fig.10**: zeigt eine perspektivische Ansicht der in dem Montageteil montierten ersten beispielhaften Ausführungsform der neuen Montageeinheit.
- **Fig.11**: zeigt eine erste Seitenansicht einer zweiten beispielhaften Ausführungsform der neuen Montageeinheit.
- **Fig.12**: zeigt eine zweite Seitenansicht der zweiten beispielhaften Ausführungsform der neuen Montageeinheit.
- **Fig.13**: zeigt eine Draufsicht der zweiten beispielhaften Ausführungsform der neuen Montageeinheit.
- **Fig.14**: zeigt eine Seitenansicht der Schraube der zweiten beispielhaften Ausführungs- form der neuen Montageeinheit.
- **Fig. 15**: zeigt eine Draufsicht des Montagerings der zweiten beispielhaften Ausführungs- form der neuen Montageeinheit.
- **Fig.16**: zeigt eine perspektivische Ansicht des Montagerings der zweiten beispielhaften Ausführungsform der neuen Montageeinheit.
- **Fig. 17**: zeigt eine erste Seitenansicht des Montagerings der zweiten beispielhaften Ausführungsform der neuen Montageeinheit.
- **Fig.18**: zeigt eine zweite Seitenansicht des Montagerings der zweiten beispielhaften Ausführungsform der neuen Montageeinheit.
- **Fig.19**: zeigt eine erste Seitenansicht einer dritten beispielhaften Ausführungsform der neuen Montageeinheit.
- **Fig. 20**: zeigt eine zweite Seitenansicht der dritten beispielhaften Ausführungsform der neuen Montageeinheit.
- **Fig. 21**: zeigt eine Draufsicht der dritten beispielhaften Ausführungsform der neuen Montageeinheit.
- **Fig. 22**: zeigt eine Seitenansicht der Schraube der dritten beispielhaften Ausführungsform der neuen Montageeinheit.
- **Fig. 23**: zeigt eine Draufsicht des Montagerings der dritten beispielhaften Ausführungs- form der neuen Montageeinheit.
- **Fig. 24**: zeigt eine perspektivische Ansicht des Montagerings der dritten beispielhaften Ausführungsform der neuen Montageeinheit.
- **Fig. 25**: zeigt eine erste Seitenansicht des Montagerings der dritten beispielhaften Ausführungsform der neuen Montageeinheit.
- **Fig. 26**: zeigt eine zweite Seitenansicht des Montagerings der dritten beispielhaften Ausführungsform der neuen Montageeinheit.
- **Fig. 27**: zeigt eine erste Seitenansicht einer vierten beispielhaften Ausführungsform der neuen Montageeinheit.
- **Fig. 28**: zeigt eine zweite Seitenansicht der vierten beispielhaften Ausführungsform der neuen Montageeinheit.
- **Fig. 29**: zeigt eine Draufsicht der vierten beispielhaften Ausführungsform der neuen Montageeinheit.
- **Fig. 30**: zeigt eine erste Seitenansicht einer fünften beispielhaften Ausführungsform der neuen Montageeinheit.
- **Fig. 31**: zeigt eine zweite Seitenansicht der fünften beispielhaften Ausführungsform der neuen Montageeinheit.
- **Fig.32**: zeigt eine Draufsicht der fünften beispielhaften Ausführungsform der neuen Montageeinheit.

### FIGURENBESCHREIBUNG

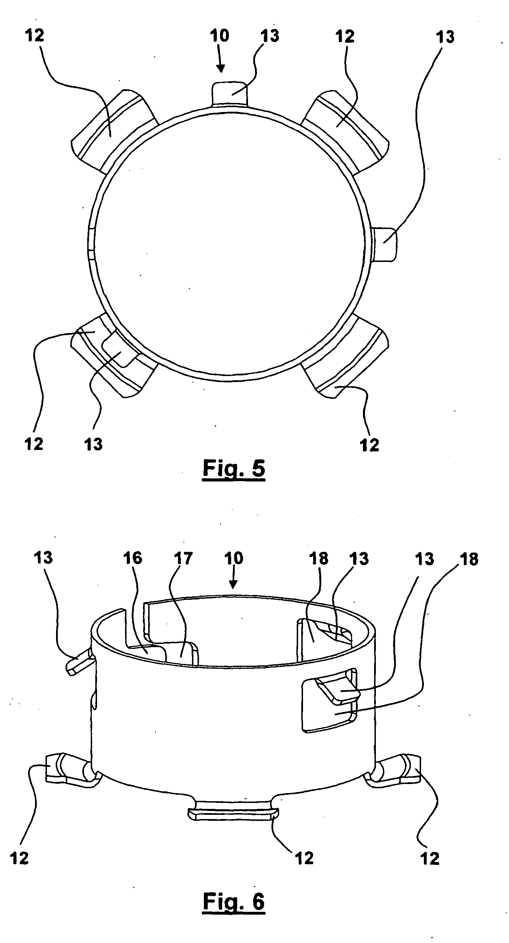

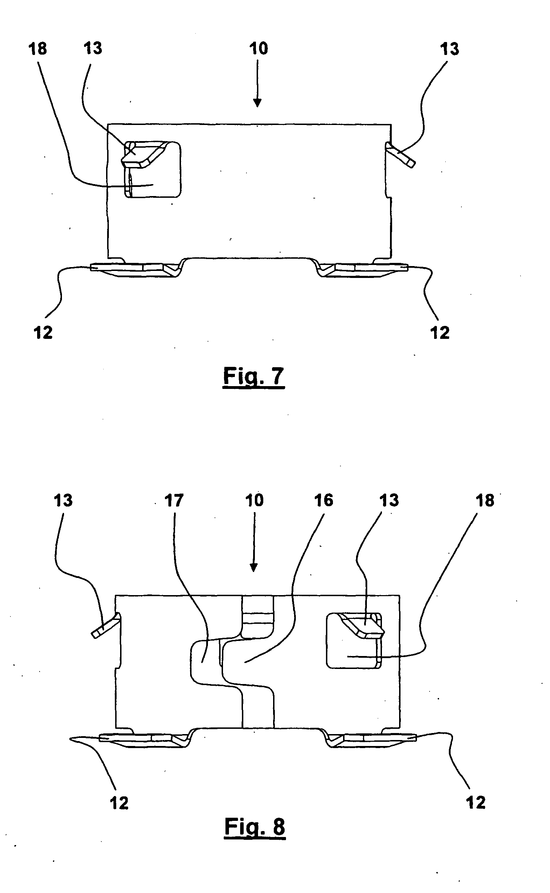

Die **Fig. 1-10** zeigen unterschiedliche Ansichten eines ersten Ausführungsbeispiels einer neuen Montageeinheit 1. Die Montageeinheit 1 dient zur drehbaren und unverlierbaren Befestigung einer Schraube 2 an einem Montageteil 3.

Im dargestellten Beispiel handelt es sich bei dem Montageteil 3 um eine Befestigungsöse 4 eines Gurtschlosses eines Pkw, Lkw, Nutzfahrzeugs oder eines anderen Fahrzeugs. Eine derartige Befestigungsöse 4 dient in bekannter Weise zur Befestigung des Gurtschlosses im Bereich des Innenraums des Fahrzeugs. Die Befestigungsöse 4 weist eine Bohrung 15 auf, in die ein Gurtabschnitt eingreift, an welchem das eigentliche Gurtschloss (nicht dargestellt) befestigt wird. Es kann sich jedoch auch um ein beliebiges anderes Montageteils 3 handeln, welches in der unterhalb beschriebenen Weise befestigt und montiert werden soll.

Die Schraube 2 der Montageeinheit 1 weist einen Kopf 5 auf. Der Kopf 5 weist für die Betätigung der Schraube 2 Angriffsflächen auf, die in beliebiger geeigneter Weise ausgebildet sind. Im dargestellten Beispiel handelt es sich um eine Außensechskantschraube. Die Schraube 2 weist weiterhin einen Schaftabschnitt 6 und einen Gewindeabschnitt 7 mit einem Gewinde 8 auf. Bei dem Gewinde 8 kann es sich um ein beliebiges Gewinde handeln. Im dargestellten Beispiel handelt es sich um ein metrisches Außengewinde. Das Gewinde 8 kann sich bis zum freien Ende der Schraube 2 erstrecken oder auch vorher enden. Im dargestellten Beispiel weist die Schraube 2 endseitig noch einen gewindefreien Zentrierbereich auf. Ebenfalls ist es möglich, mehrere Gewindeabschnitte 7 und ggf. andere Abschnitte entlang der Schraube 2 vorzusehen. Der Schaftabschnitt 6 schließt mit seinem oberen Ende an den Kopf 5 der Schraube 2 an. Stattdessen könnte jedoch auch noch ein weiterer Abschnitt zwischen dem Schaftabschnitt 6 und dem Kopf 5 der Schraube 2 vorgesehen sein. An seinem dem Kopf 5 abgewandten Ende schließt der Schaftabschnitt 6 bei dieser Ausführungsform der Schraube 2 an eine Schulter 9 an, die einen größeren Außendurchmesser als der Schaftabschnitt 6 besitzt.

Auf dem Schaftabschnitt 6 ist ein Montagering 10 angeordnet. Der Montagering 10 ist in Richtung der Schraubenachse 11 im Wesentlichen unverschieblich auf dem Schaftabschnitt 6 angeordnet. Im dargestellten Beispiel der Montageeinheit 1 bzw. des Montagerings 10 wird die im Wesentlichen unverschiebliche Lagerung des Montagerings 10 dadurch erreicht, dass dieser einen kleineren Durchmesser als die Schulter 9 besitzt und seine Abmaße auf die des Schaftabschnitts 6 abgestimmt sind. Für die Montage ist der Montagering 10 hier als in Umfangsrichtung nicht geschlossener Ring, insbesondere aus Federstahl, mit einer Zunge 16 und einer korrespondierenden Ausnehmung 17 ausgebildet, so dass er unter elastischer Aufweitung über den Gewindeabschnitt 7 und die Schulter 9 in den Bereich des Schaftabschnitts 6 geschoben werden kann. Aufgrund der elastischen Rückstellkräfte verringert sich dort der Durchmesser des Montagerings 10 nach dessen Entlastung, so dass dieser gewissermaßen in die durch den Schaftabschnitt 6 hinter der Schulter 8 gebildete Hinterschneidung eingreift. Andere Ausbildungen des Montagerings 10 sind jedoch ebenfalls möglich.

In seinem dem Kopf 5 der Schraube 2 zugewandten Endbereich weist der Montagering 10 eine Mehrzahl von Anpresselementen 12 auf. Es könnte jedoch auch nur ein Anpresselement 12 oder auch überhaupt kein Anpresselement vorgesehen sein. Im dargestellten Beispiel handelt es sich bei den Anpresselementen 12 um von der ringförmigen äußeren Oberfläche des Montagerings 10 abkragende Materialabschnitte, die derart ausgebildet sind, dass sie eine Federkraft ausüben, so dass der Montagering 10 spiel- und klapperfrei zwischen dem Kopf 5 und der Schulter 9 eingeklemmt ist.

Der Montagering 10 weist weiterhin eine Mehrzahl von beabstandeten Halteelementen 13 auf. Er könnte stattdessen jedoch auch nur ein Halteelement 13 aufweisen. Im dargestellten Beispiel sind die Halteelemente 13 gleichmäßig um den Umfang des Montagerings 10 verteilt angeordnet. Die Halteelemente 13 sind derart ausgebildet und angeordnet, dass das Montageteil 3 mit seiner randgeschlossenen Bohrung 14 über die Halteelemente 13 hinwegschiebbar und so durch die Halteelemente 13 auf dem Montagering 10 befestigbar ist, dass die Schraube 2 relativ zu dem Montageteil 3 drehbar und in Richtung der Schraubenachse 11 unverschieblich angeordnet ist.

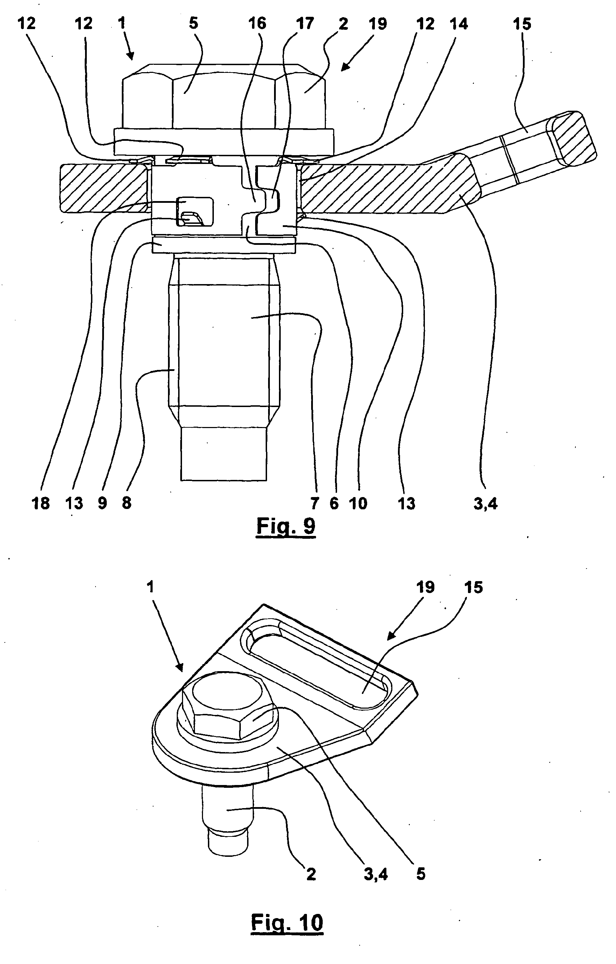

Im dargestellten ersten Beispiel sind die Halteelemente 13 als elastische Schnappelemente ausgebildet. Die Halteelemente 13 sind aus dem Material des Montagerings 10 gebildet und kragen von der äußeren Oberfläche des Montagerings 13 nach außen ab, wobei ihr freies Ende in Richtung auf den Kopf 5 der Schraube 2 zeigt. Für diese Ausbildung weist der Montagering 10 Ausstanzungen 18 auf, die die zuvor beschriebene Ausbildung der Halteelemente 13 gestatten. Die Halteelemente 13 kragen aus also aus Ausstanzungen 18 hervor. Andere Arten der Ausbildung und Anordnung der Halteelemente 13 sind jedoch ebenfalls möglich. Bei der Herstellung des Montagerings 10 werden die Halteelemente 13 unter elastisch-plastischer Verformung aus der Oberfläche des Montagerings 10 herausgebogen, so dass sie in der gewünschten Weise und unter dem gewünschten Winkel - z. B. etwa 30° - vom Montagering 10 abstehen. Wenn nun das Montageteil 3 bei der Montage mit seiner inneren Oberfläche beim Schieben in Richtung auf den Kopf 5 der Schraube 2 die Halteelemente 13 kontaktiert, werden diese unter elastischer Verformung in Richtung auf die Ringfläche des Montagerings 10 zurückdeformiert. Nachdem das Montageteil 3 beim weiteren Schieben in Richtung auf den Kopf 5 der Schraube 2 die Halteelemente 13 freigegeben hat, schnappen diese elastisch zurück und setzen das Montageteil 3 in der Weise fest, wie dies besonders gut in Fig. 9 erkennbar ist. Die Halteelemente 13 kontaktieren somit die untere Oberfläche des Montageteils 3, während die obere Oberfläche des Montageteils 3 von den federnd nachgiebig ausgebildeten Anpresselementen 12 in Richtung auf die Halteelemente 13 gedrückt wird. In dieser Weise ist das Montageteil 3 sicher und spielfrei auf dem Montagering 10 gehalten. Somit wird eine ungewollte Verschiebung des Montageteils 3 relativ zu der Schraube 2 in Richtung der Schraubenachse 11 wirksam verhindert.

Gleichzeitig ist das Montageteil 3 jedoch weiterhin relativ zu der Schraube 2 drehbar bzw. verschwenkbar. Im vorliegenden Beispiel ist sowohl der Montagering 10 relativ zu der Schraube 2 als auch das Montageteil 3 relativ zu dem Montagering 10 drehbar. Andere Anordnungen sind jedoch ebenfalls möglich, solange letztendlich eine relative Drehung zwischen der Schraube 2 und dem Montageelement 3 ermöglicht wird.

In dem im Montageteil 3 befestigten Zustand der Montageeinheit 1 bilden diese Teile gemeinsam eine Montagegruppe 19. Die Montagegruppe 19 kann vormontiert und ohne Gefahr des Verlierens einzelner Bestandteile in den Bereich des Bauteils transportiert werden, an welchem die Montagegruppe 19 schließlich montiert werden soll. Hierdurch ist eine wirtschaftliche Montage der Montagegruppe 19 besonders gut möglich.

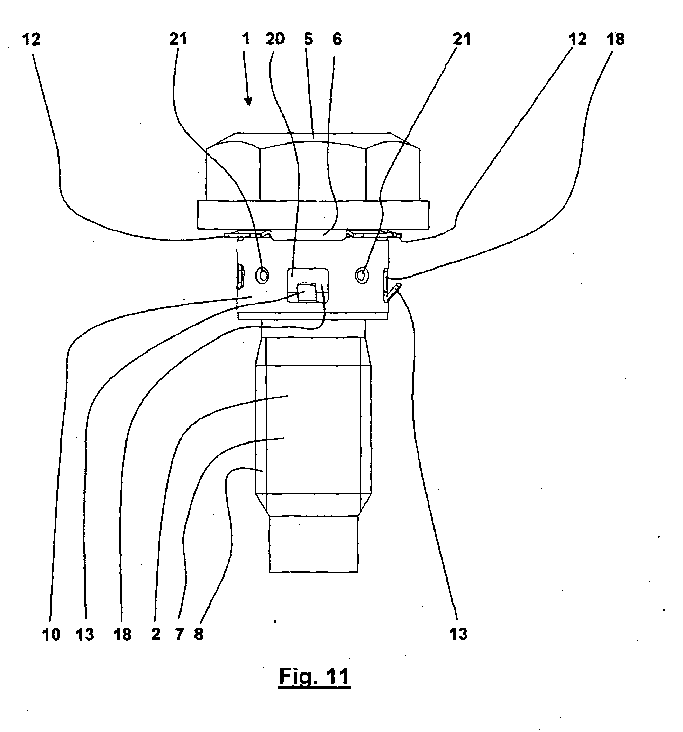

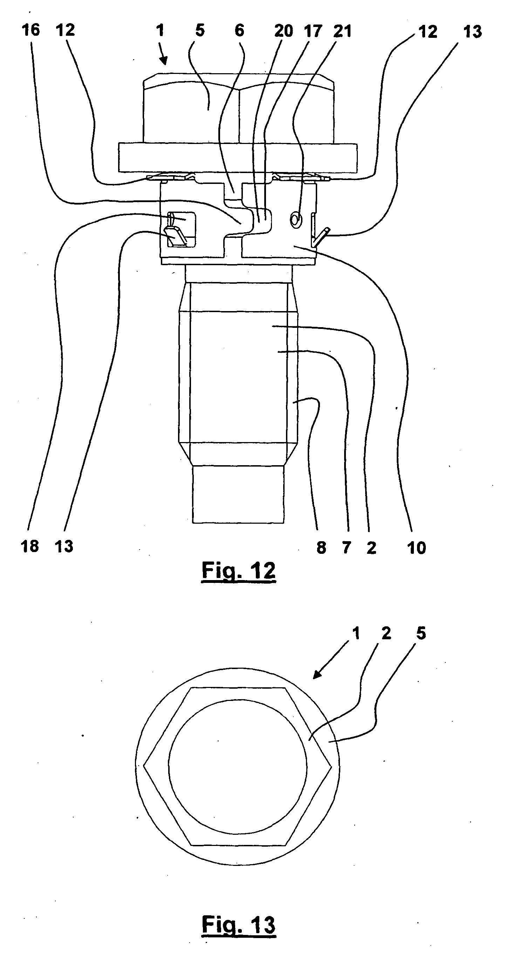

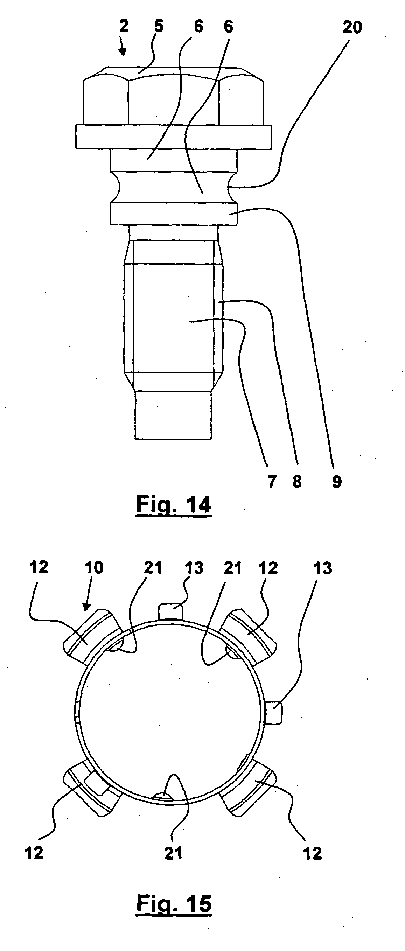

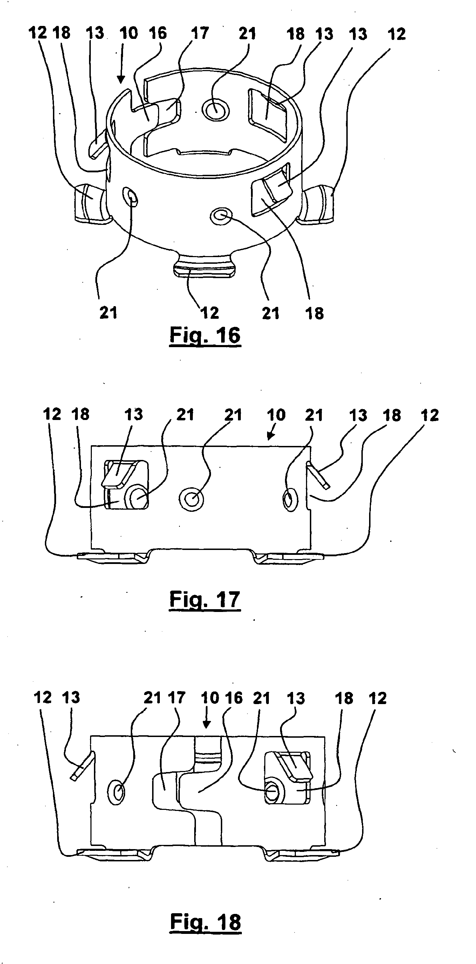

Die **Fig. 11-18** zeigen entsprechende Darstellungen eines zweiten Ausführungsbeispiels der neuen Montageeinheit 1. Es versteht sich, dass diese Montageeinheit 1 ebenfalls in das in den Fig. 9, 10 gezeigte Montageteil 3 oder ein beliebiges anderes Montageteil zur Bildung einer Montagegruppe 19 montiert werden kann.

Die Montageeinheit 1 gemäß den Fig. 11-18 weist eine Reihe von Gemeinsamkeiten mit der Montageeinheit 1 gemäß den Fig. 1-10 auf, so dass auf die Ausführungen oberhalb verwiesen wird.

Im Unterschied dazu weist die Schraube 2 keine Schulter mit einem größeren Durchmesser, sondern stattdessen eine umlaufende Nut 20 auf. Anstelle der umlaufenden Nut 20 könnten jedoch auch beabstandete Vertiefungen oder dergleichen vorgesehen sein. In letzteren Fall kann der Montagering 10 im Wesentlichen drehfest auf dem Schaft 6 der Schraube 2 angeordnet werden, so dass die erforderliche relative Drehung hier zwischen dem Montageteil 3 und dem Montagering 10 stattfindet. Zur axialen Sicherung des Montagering 10 im Bereich des Schaftabschnitts 6 weist der Montagering 10 eine Mehrzahl korrespondierender Fixierelemente 21 auf, die in die Nut 20 eingreifen. Es könnte jedoch auch nur ein einziges Fixierelement vorgesehen sein. Im dargestellten Beispiel handelt es sich bei den Fixierelementen 21 um Abschnitte des Montagerings 10, die in den Innenraum des Montagerings 10 hineinragen. Es handelt sich insbesondere um Einprägungen der Oberfläche des Montagerings 10.

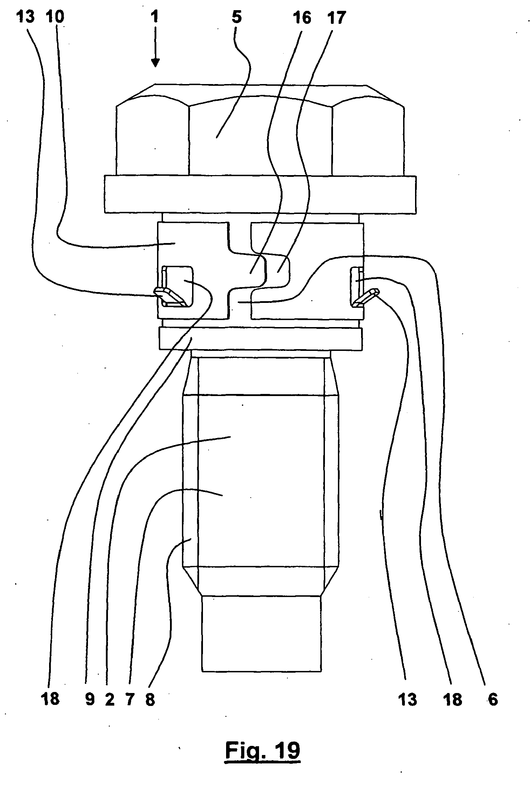

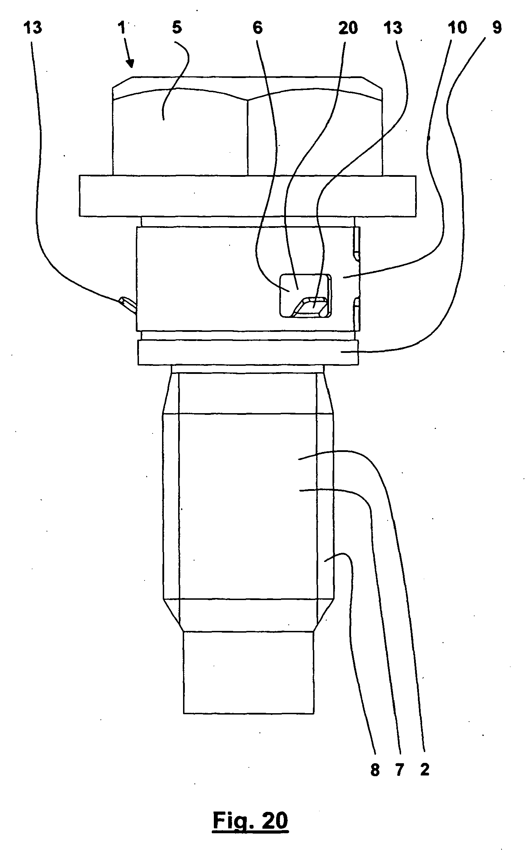

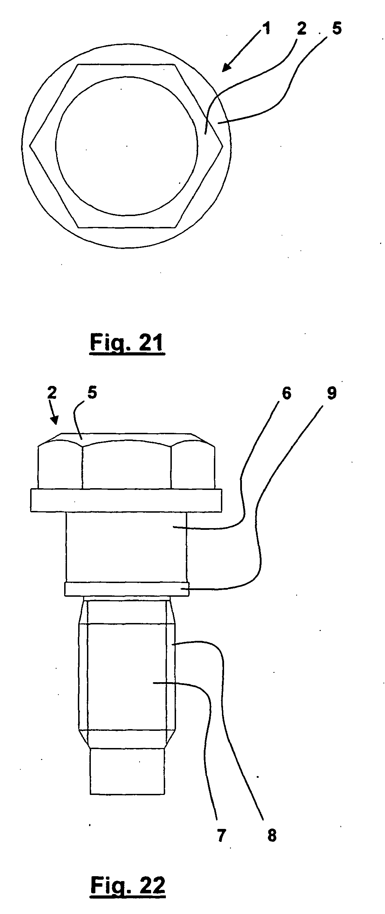

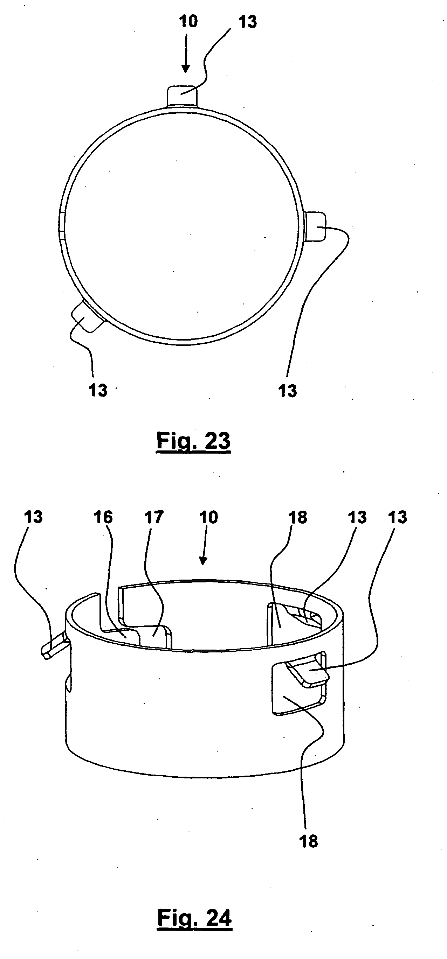

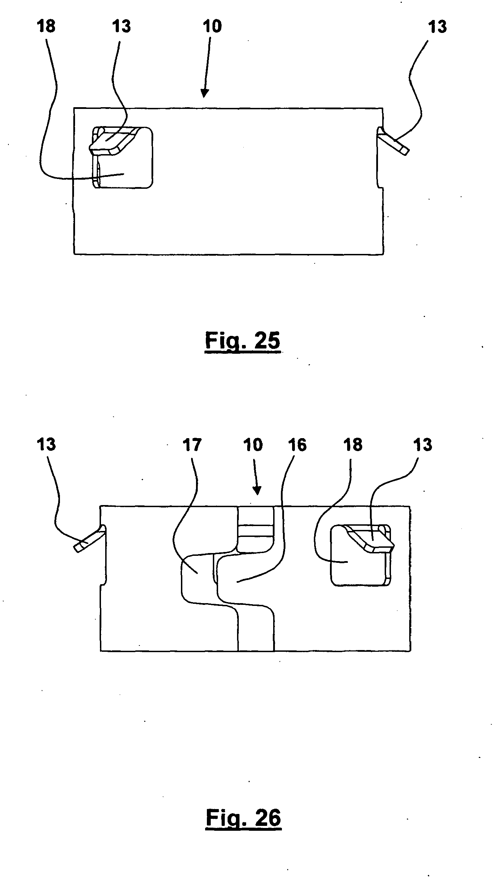

Die **Fig. 19-26** zeigen eine dritte beispielhafte Ausführungsform der neuen Montageeinheit 1. Für die gemeinsamen Merkmale wird wiederum auf die Ausführungen oberhalb verwiesen. Im vorliegenden Fall besteht die Besonderheit darin, dass der Montagering 10 keine Anpresselemente aufweist.

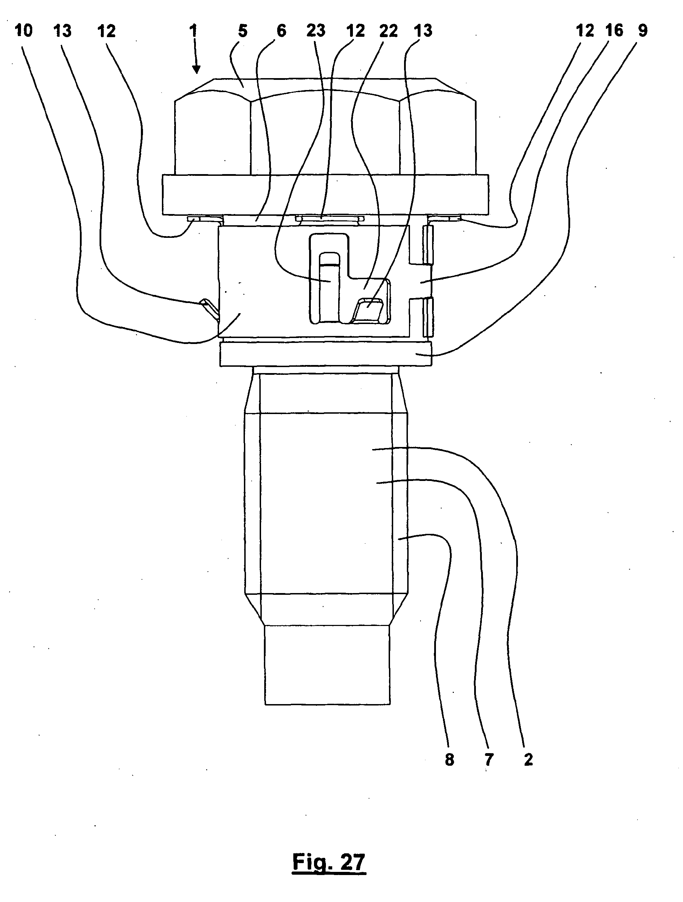

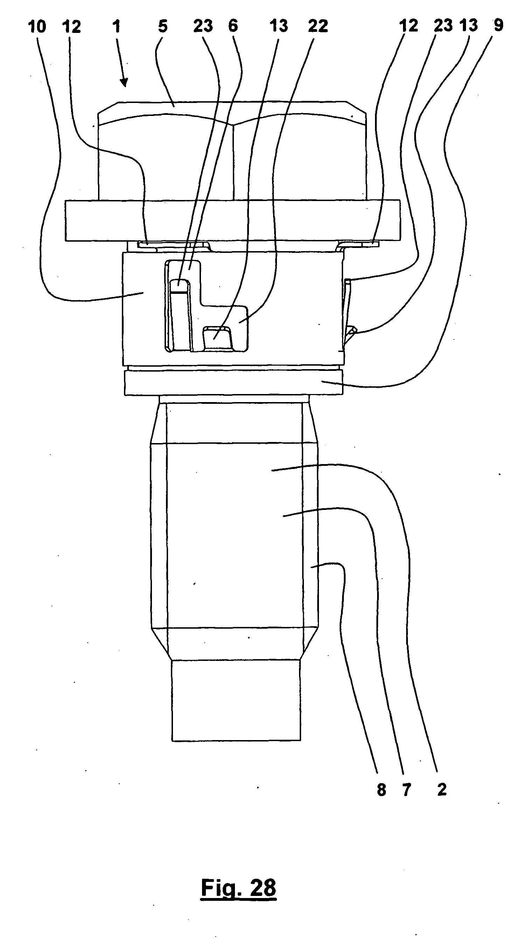

Die **Fig. 27-29** zeigen eine vierte beispielhafte Ausführungsform der Montageeinheit 1. Für die übereinstimmenden Merkmale wird auf die vorangegangenen Ausführungen und insbesondere die in Bezug auf die erste Ausführungsform der Montageeinheit 1 verwiesen. Im vorliegenden vierten Beispiel weist der Montagering 10 eine L-förmige Ausstanzung 22 auf, aus der neben dem Halteelement 13 ein weiteres Element 23 hervorsteht. Das Element 23 hat die Aufgabe, das infolge von Toleranzen unvermeidliche Spiel zwischen dem Außendurchmesser des Montagerings 10 und dem Innendurchmesser der Bohrung 14 des Montageteils 3 auszugleichen und dadurch etwaige Klappergeräusche zu verhindern. Die mehreren, über den Umfang verteilten Elemente 23 liegen also am Innendurchmesser der Bohrung 14 des Montageteils 3 an.

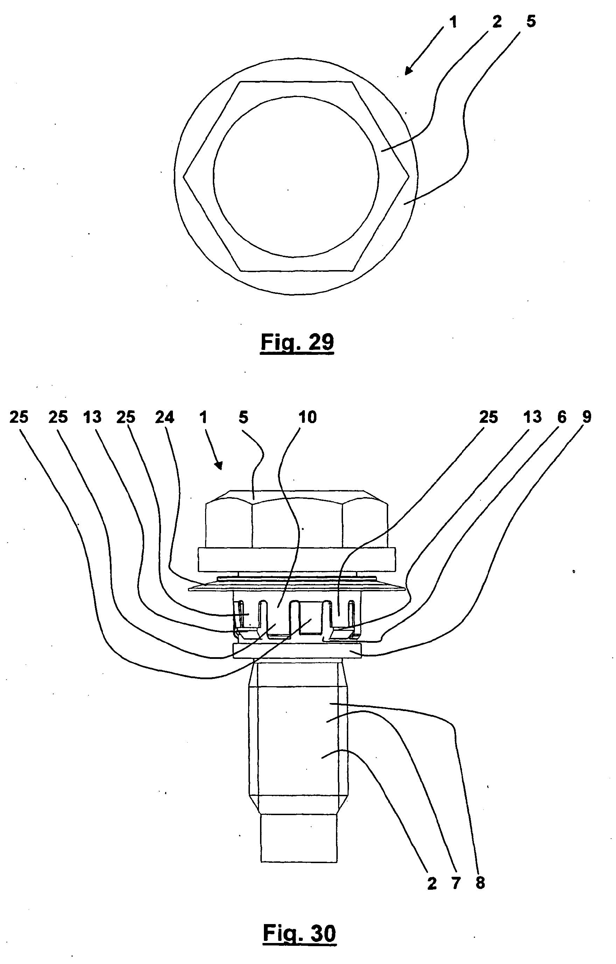

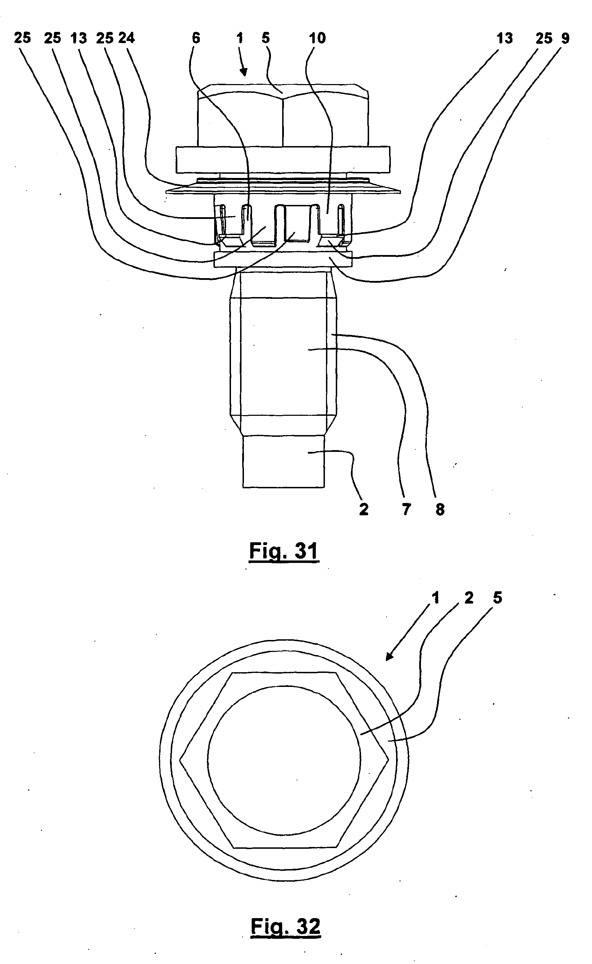

Die **Fig. 30-32** zeigen schließlich ein fünftes Ausführungsbeispiel der neuen Montageeinheit 1. In diesem Fall weist der Montagering 10 einen Kragen 24 auf. Zur Befestigung des Montagerings 10 auf dem Schaftabschnitt 6 der Schraube 2 dient eine Mehrzahl von krallenförmigen Fixierelementen 25. Der Montagering 10 ist mit ein wenig Spiel auf dem Schaftabschnitt 6 der Schraube 2 angeordnet. Da es sich bei dem Montagering 10 hierbei insbesondere um einen Kunststoffring handelt und dieser mit seinen Fixierelementen 25 vergleichsweise fest auf der Oberfläche des Schaftabschnitts 6 sitzt, ist dieses Spiel jedoch nicht nachteilig, da Klappergeräusche nicht auftreten können. Ein ungewolltes axiales Abziehen des Montagerings 10 in Richtung auf das freie Ende der Schraube 2 wird sicher durch die Schulter 9 verhindert.

### BEZUGSZEICHENLISTE

- 1: Montageeinheit
- 2: Schraube
- 3: Montageteil
- 4: Befestigungsöse
- 5: Kopf
- 6: Schaftabschnitt
- 7: Gewindeabschnitt
- 8: Gewinde
- 9: Schulter
- 10: Montagering
- 11: Schraubenachse
- 12: Anpresselement
- 13: Halteelement
- 14: Bohrung
- 15: Bohrung
- 16: Zunge
- 17: Ausnehmung
- 18: Ausstanzung
- 19: Montagegruppe
- 20: Nut
- 21: Fixierelement
- 22: Ausstanzung
- 23: Element
- 24: Kragen
- 25: Fixierelement

## Patentansprüche

1. Montageeinheit (1) für die drehbare und unverlierbare Befestigung einer Schraube (2) an einem Montageteil (3), mit
einer Schraube (2) mit einem Kopf (5), einem Schaftabschnitt (6) und einem Gewindeabschnitt (7) mit einem Gewinde (8), wobei der Schaftabschnitt (6) in einem Bereich zwischen dem Kopf (2) und dem Gewindeabschnitt (7) angeordnet ist; und
einem Montagering (10), wobei der Montagering (10) in Richtung der Schraubenachse (11) unverschieblich auf dem Schaftabschnitt (6) angeordnet ist, wobei der Montagering (10) mindestens ein Halteelement (13) aufweist, das derart ausgebildet und angeordnet ist, dass ein Montageteil (3) über das Halteelement (13) hinweg schiebbar und so durch das Halteelement (13) befestigbar ist, dass die Schraube (2) relativ zu dem Montageteil (3) drehbar und in Richtung der Schraubenachse (11) unverschieblich angeordnet ist.

2. Montageeinheit (1) nach Anspruch 1, **dadurch gekennzeichnet, dass** das mindestens eine Halteelement (13) ein Schnappelement ist, das elastisch nachgiebig und derart aus dem Montagering (10) hervorstehend ausgebildet ist, dass das Montageteil (3) unter elastischer Verformung des Schnappelements über dieses hinweg schiebbar und nach elastischer Rückfederung des Schnappelements durch das Schnappelement befestigbar ist.

3. Montageeinheit (1) nach Anspruch 1 oder 2, **dadurch gekennzeichnet, dass** der Montagering mindestens ein Anpresselement (12) aufweist, wobei das mindestens eine Halteelement (13) im Bereich des dem Gewindeabschnitt (7) zugewandten axialen Endes des Montagerings (10) und das mindestens eine Anpresselement (12) im Bereich des dem Kopf (5) zugewandten axialen Endes des Montagerings (10) derart angeordnet ist, dass das Montageteil (3) ohne axiales Spiel zwischen dem mindestens einen Anpresselement (12) und dem mindestens einen Halteelement (13) befestigbar ist.

4. Montageeinheit(1) nach Anspruch 3, **dadurch gekennzeichnet, dass** das mindestens eine Anpresselement (12) elastisch nachgiebig und zum Aufbringen einer Federkraft auf das Montageteil (3) ausgebildet ist, so dass das Montageteil (3) im montierten Zustand an das mindestens eine Halteelement (13) angepresst wird.

5. Montageeinheit (1) nach einem der Ansprüche 1 bis 4, **dadurch gekennzeichnet, dass** der Montagering (10) als in Umfangsrichtung nicht geschlossener Ring, insbesondere aus Federstahl, ausgebildet ist.

6. Montageeinheit (1) nach einem der Ansprüche 1 bis 5, **dadurch gekennzeichnet, dass** die Schraube (2) eine Schulter (9) aufweist, die in Richtung der Schraubenachse (11) zum Gewindeabschnitt (7) hin an den Schaftabschnitt (6) anschließt und einen größeren Außendurchmesser als der Schaftabschnitt (6) aufweist.

7. Montageeinheit (1) nach einem der Ansprüche 1 bis 6, **dadurch gekennzeichnet, dass** die Schraube (2) eine Nut (20) aufweist, die im Bereich des Schaftabschnitts (6) vorgesehen ist und dass der Montagering (10) mindestens ein korrespondierendes Fixierelement (21) aufweist, das in die Nut (20) eingreift.

8. Montageeinheit (1) nach einem der Ansprüche 1 bis 7, **dadurch gekennzeichnet, dass** der Schaftabschnitt (6) einen größeren Außendurchmesser als der Gewindeabschnitt (7) aufweist.

9. Montageeinheit (1) nach einem der Ansprüche 1 bis 8, **dadurch gekennzeichnet, dass** das Montageteil (3) eine randgeschlossene Bohrung (14) aufweist, durch die sich im montierten Zustand des Montageteils (3) die Schraube (2) mit dem auf der Schraube (2) befestigten Montagering (10) zumindest teilweise erstreckt.

10. Montageeinheit (1) nach einem der Ansprüche 1 bis 9, **dadurch gekennzeichnet, dass** es sich bei dem Montageteil (3) um die Befestigungsöse (4) eines Gurtschlosses eines Pkw, Lkw oder anderen Nutzfahrzeugs handelt.

11. Montagegruppe (19) für die Verschraubung eines Montageteils (3) mit einem Bauteil, mit
einem Montageteil (3) mit einer Bohrung (14);
einer Schraube (2) mit einem Kopf (5), einem Schaftabschnitt (6) und einem Gewindeabschnitt (7) mit einem Gewinde (8), wobei der Schaftabschnitt (6) in einem Bereich zwischen dem Kopf (5) und dem Gewindeabschnitt (7) angeordnet ist, wobei sich die Schraube (2) durch die Bohrung (14) des Montageteils (3) erstreckt; und
einem Montagering (10), wobei der Montagering (10) in Richtung der Schraubenachse (11) unverschieblich auf dem Schaftabschnitt (11) angeordnet ist, wobei der Montagering (10) mindestens ein Halteelement (13) aufweist, das derart ausgebildet und angeordnet ist, dass das Montageteil (3) so durch das Halteelement (13) gehalten ist, dass die Schraube (2) relativ zu dem Montageteil (3) drehbar und in Richtung der Schraubenachse (11) unverschieblich angeordnet ist.

12. Montagegruppe (19) nach Anspruch 11, **dadurch gekennzeichnet, dass** das mindestens eine Halteelement (13) elastisch nachgiebig und derart aus dem Montagering (10) hervorstehend ausgebildet ist, dass das Montageteil (3) aus der unmontierten Stellung heraus unter elastischer Verformung des Halteelements (13) über dieses hinweg schiebbar und nach elastischer Rückfederung des Halteelements (13) in der montierten Stellung durch das Halteelement (13) befestigt ist.

13. Montagegruppe (19) nach Anspruch 11 oder 12, **dadurch gekennzeichnet, dass** der Montagering (10) mindestens ein Anpresselement (12) aufweist, wobei das mindestens eine Halteelement (13) im Bereich des dem Gewindeabschnitt (7) zugewandten axialen Endes des Montagerings (10) und das mindestens eine Anpresselement (12) im Bereich des dem Kopf (5) zugewandten axialen Endes des Montagerings (10) derart angeordnet ist, dass das Montageteil (3) ohne axiales Spiel zwischen dem mindestens einen Anpresselement (12) und dem mindestens einen Halteelement (13) befestigt ist.

14. Montagegruppe (19) nach Anspruch 13, **dadurch gekennzeichnet, dass** das mindestens eine Anpresselement (12) elastisch nachgiebig ausgebildet ist und eine Federkraft auf das Montageteil (3) ausübt, so dass das Montageteil (3) an das mindestens eine Halteelement (13) angepresst wird.

15. Montagegruppe (19) nach einem der Ansprüche 11 bis 14, **dadurch gekennzeichnet, dass** es sich bei dem Montageteil (3) um die Befestigungsöse (4) eines Gurtschlosses eines Pkw, Lkw oder anderen Nutzfahrzeugs handelt.

## Claims

1. An assembly unit (1) for fixing a screw (2) to an assembly element (3) in a rotatable and captive way, comprising:
a screw (2) including a head (5), a shank portion (6) and a threaded portion (7) with a thread (8), the shank portion (6) being arranged in a region between the head (2) and the threaded portion (7); and
an assembly ring (10), the assembly ring (10) being arranged on the shank portion (6) in a way not to be movable in the direction of the screw axis (11), the assembly ring (10) including at least one retaining element (13) being designed and arranged such that an assembly element (3) can be pushed over the retaining element (13) and can be fixed by the retaining element (13) such that the screw (2) is arranged to be rotatable with respect to the assembly element (3) and not to be movable in the direction of the screw axis (11).

2. The assembly unit (1) of claim 1, **characterized in that** the at least one retaining element (13) is a snap lock element being designed to be resilient and to protrude from the assembly ring (10) in a way that the assembly element (3) can be pushed over and beyond the snap lock element under elastic deformation of the snap lock element and can be fixed by the snap lock element after elastic springback of the snap lock element.

3. The assembly unit (1) of claim 1 or 2, **characterized in that** the assembly ring (10) includes at least one pressing on element (12), the at least one retaining element (13) in the region of the axial end of the assembly ring (10) facing the threaded portion (7) and the at least one pressing on element (12) in the region of the axial end of the assembly ring (10) facing the head (5) being arranged such that the assembly element (3) can be fixed between the at least one pressing on element (12) and the at least one retaining element (13) without axial play.

4. The assembly unit (1) of claim 3, **characterized in that** the at least one pressing on element (12) is designed to be resilient and to apply a spring force to the assembly element (3) such that the assembly element (3) in the mounted position is pressed against the at least one retaining element (13).

5. The assembly unit (1) of at least one of claims 1 to 4, **characterized in that** the assembly ring (10) is designed as a ring not being closed in the circumferential direction, especially a ring made of spring steel.

6. The assembly unit (1) of at least one of claims 1 to 5, **characterized in that** the screw (2) includes a shoulder (9), the shoulder (9) in the direction of the screw axis (11) towards the threaded portion (7) being located next to the shank portion (6) and having a greater outer diameter than the shank portion (6).

7. The assembly unit (1) of at least one of claims 1 to 6, **characterized in that** the screw (2) includes a groove (20) being located in the region of the shank portion (6) and that the assembly ring (10) includes at least one corresponding fixing element (21) engaging into the groove (20).

8. The assembly unit (1) of at least one of claims 1 to 7, **characterized in that** the shank portion (6) has a greater outer diameter than the threaded portion (7).

9. The assembly unit (1) of at least one of claims 1 to 8, **characterized in that** the assembly element (3) includes a circumferentially closed bore (14), the screw (2) with the assembly ring (10) being fixed thereto at least partly extending through the bore (14) in the mounted condition of the assembly element (3).

10. The assembly unit (1) of at least one of claims 1 to 9, **characterized in that** the assembly element (3) is the fastening eyelet (4) of a belt buckle of an automobile, a truck or a different commercial vehicle.

11. An assembly set (19) for connecting an assembly element (3) to a component by screwing, comprising:
an assembly element (3) including a bore (14);
a screw (2) including a head (5), a shank portion (6) and a threaded portion (7) with a thread (8), the shank portion (6) being arranged in a region between the head (2) and the threaded portion (7), the screw (2) extending through the bore (14) of the assembly element (3); and
an assembly ring (10), the assembly ring (10) being arranged on the shank portion (6) in a way not to be movable in the direction of the screw axis (11), the assembly ring (10) including a retaining element (13) being designed and arranged such that the assembly element (3) is held by the retaining element (13) in a way that the screw (2) is arranged to be rotatable with respect to the assembly element (3) and not to be movable in the direction of the screw axis (11).

12. The assembly set (19) of claim 11, **characterized in that** the at least one retaining element (13) is designed to be resilient and to protrude from the assembly ring (10) in a way that the assembly element (3) starting from the unmounted position can be pushed over and beyond the retaining element (13) under elastic deformation of the retaining element (13) and can be fixed by the retaining element (13) after elastic springback of the retaining element (13) in the mounted position.

13. The assembly set (19) of claim 11 or 12, **characterized in that** the assembly ring (10) includes at least one pressing on element (12), the at least one retaining element (13) in the region of the axial end of the assembly ring (10) facing the threaded portion (7) and the at least one pressing on element (12) in the region of the axial end of the assembly ring (10) facing the head (5) being arranged such that the assembly element (3) can be fixed between the at least one pressing on element (12) and the at least one retaining element (13) without axial clearance.

14. The assembly set (19) of claim 13, **characterized in that** the at least one pressing on element (12) is designed to be resilient and to apply a spring force to the assembly element (3) such that the assembly element (3) is pressed against the at least one retaining element (13).

15. The assembly set (19) of at least one of claims 11 to 14, **characterized in that** the assembly element (3) is the fastening eyelet (4) of a belt buckle of an automobile, a truck or a different commercial vehicle.

## Revendications

1. Unité de montage (1) pour la fixation rotative et imperdable d'une vis (2) sur un élément de montage (3), comportant
une vis (2) avec une tête (5), une partie de tige (6) et une partie filetée (7) avec un filetage (8), la partie de tige (6) étant disposée dans une zone entre la tête (5) et la partie filetée (7) ; et
une bague de montage (10), ladite bague de montage (10) étant disposée sur la partie de tige (6) de manière immobile dans la direction de l'axe (11) de la vis, ladite bague de montage (10) comportant au moins un élément de retenue (13) qui est réalisé et disposé de telle sorte qu'un élément de montage (3) est apte à coulisser sur l'élément de retenue (13) et est apte à être fixé par l'élément de retenue (13), de telle sorte que la vis (2) est apte à tourner par rapport à l'élément de montage (3) et est immobile dans la direction de l'axe (11) de la vis.

2. Unité de montage (1) selon la revendication 1, **caractérisée en ce que** ledit au moins un élément de retenue (13) est un élément à encliqueter, qui est élastiquement flexible et qui est réalisé en saillie sur la bague de montage (10), de telle sorte que l'élément de montage (3) est apte à coulisser au-dessus de l'élément à encliqueter moyennant la déformation élastique de ce dernier et, après le rappel élastique de l'élément à encliqueter, est apte à être fixé par l'élément à encliqueter.

3. Unité de montage (1) selon la revendication 1 ou 2, **caractérisée en ce que** la bague de montage comporte au moins un élément de serrage (12), ledit au moins un élément de retenue (13) étant disposé dans la zone de l'extrémité axiale de la bague de montage (10), orientée vers la partie filetée (7), et ledit au moins un élément de serrage (12) étant disposé dans la zone de l'extrémité axiale de la bague de montage (10), orientée vers la tête (5), de telle sorte que l'élément de montage (3) peut être fixé sans jeu axial entre ledit au moins un élément de serrage (12) et ledit au moins un élément de retenue (13).

4. Unité de montage (1) selon la revendication 3, **caractérisée en ce que** ledit au moins un élément de serrage (12) est élastiquement flexible et est réalisé pour appliquer une force de ressort sur l'élément de montage (3), de telle sorte que ledit élément de montage (3) est serré, dans la position montée, contre ledit au moins un élément de retenue (13).

5. Unité de montage (1) selon l'une quelconque des revendications 1 à 4, **caractérisée en ce que** la bague de montage (10) est réalisée sous la forme d'une bague non fermée dans le sens périphérique, en particulier en acier à ressort.

6. Unité de montage (1) selon l'une quelconque des revendications 1 à 5, **caractérisée en ce que** la vis (2) comporte un épaulement (9) qui, dans la direction de l'axe (11) de la vis vers la partie filetée (7), est adjacent à la partie de tige (6) et possède un diamètre extérieur plus grand que celui de la partie de tige (6).

7. Unité de montage (1) selon l'une quelconque des revendications 1 à 6, **caractérisée en ce que** la vis (2) comporte une rainure (20), qui est prévue dans la zone de la partie de tige (6), et **en ce que** la bague de montage (10) comporte au moins un élément de fixation (21), qui s'engage dans la rainure (20).

8. Unité de montage (1) selon l'une quelconque des revendications 1 à 7, **caractérisée en ce que** la partie de tige (6) a un diamètre extérieur supérieur à celui de la partie filetée (7).

9. Unité de montage (1) selon l'une quelconque des revendications 1 à 8, **caractérisée en ce que** l'élément de montage (3) comporte une forure (14) fermée sur le bord, à travers laquelle la vis (2), avec la bague de montage (10) fixée à ladite vis (2), s'étend au moins partiellement lorsque l'élément de montage (3) est dans la position montée.

10. Unité de montage (1) selon l'une quelconque des revendications 1 à 9, **caractérisée en ce que** l'élément de montage (3) est la patte de fixation (4) d'une boucle de fermeture d'une ceinture dans un véhicule de tourisme, un camion ou tout autre véhicule utilitaire.

11. Groupe de montage (19) pour l'assemblage vissé d'un élément de montage (3) avec un élément, comportant
un élément de montage (3) avec une forure (14) ;
une vis (2) avec une tête (5), une partie de tige (6) et une partie filetée (7) avec un filetage (8), la partie de tige (6) étant disposée dans une zone entre la tête (5) et la partie filetée (7), la vis (2) s'étendant à travers la forure (14) de l'élément de montage (3) ; et
une bague de montage (10), ladite bague de montage (10) étant disposée sur la partie de tige (6) de manière immobile dans la direction de l'axe (11) de la vis, ladite bague de montage (10) comportant au moins un élément de retenue (13) qui est réalisé et disposé de telle sorte que l'élément de montage (3) est maintenu par l'élément de retenue (13), de telle sorte que la vis (2) est apte à tourner par rapport à l'élément de montage (3) et est immobile dans la direction de l'axe (11) de la vis.

12. Groupe de montage (19) selon la revendication 11, **caractérisé en ce que** ledit au moins un élément de retenue (13) est élastiquement flexible et est réalisé en saillie sur la bague de montage (10), de telle sorte que l'élément de montage (3) est apte à se déplacer hors de la position non montée au-dessus de l'élément de retenue (13) moyennant la déformation élastique de ce dernier et, après le rappel élastique de l'élément de retenue (13), est fixé dans la position montée par l'élément de retenue (13).

13. Groupe de montage (19) selon la revendication 11 ou 12, **caractérisé en ce que** la bague de montage (10) comporte au moins un élément de serrage (12), ledit au moins un élément de retenue (13) étant disposé dans la zone de l'extrémité axiale de la bague de montage (10), orientée vers la partie filetée (7), et ledit au moins un élément de serrage (12) étant disposé dans la zone de l'extrémité axiale de la bague de montage (10), orientée vers la tête (5), de telle sorte que l'élément de montage (3) est fixé sans jeu axial entre ledit au moins un élément de serrage (12) et ledit au moins un élément de retenue (13).

14. Groupe de montage (19) selon la revendication 13, **caractérisé en ce que** ledit au moins un élément de serrage (12) est élastiquement flexible et exerce une force de ressort sur l'élément de montage (3), de telle sorte que ledit élément de montage (3) est serré contre ledit au moins un élément de retenue (13).

15. Groupe de montage (19) selon l'une quelconque des revendications 11 à 14, **caractérisé en ce que** l'élément de montage (3) est la patte de fixation (4) d'une boucle de fermeture d'une ceinture dans un véhicule de tourisme, un camion ou tout autre véhicule utilitaire.
